# FASCICULE DE BREVET EUROPEEN

(11) **EP 2 918 475 B1**
(45) Date de publication et mention de la délivrance du brevet: **20.12.2017**
(21) Numéro de dépôt: 15158285.5
(22) Date de dépôt: 09.03.2015
(51) Int. Cl.: B62B 9/00, B62B 7/00, B62B 9/14

(54) **Siège de poussette, et poussette correspondante**
Kinderwagensitz und entsprechender Kinderwagen
Stroller seat, and corresponding stroller

(30) Priorité: 13.03.2014 FR 1452085; 03.04.2014 FR 1452992
(43) Date de publication de la demande: 16.09.2015
(73) Titulaire: Dorel France SA, 49309 Cholet Cedex (FR)
(72) Inventeur: Naslain, Yann, 49300 CHOLET (FR); Bondu, Gilles, 49100 ANGERS (FR)
(74) Mandataire: Vidon Brevets & Stratégie

(56) Documents cités:
- EP-A1- 2 261 077
- CN-U- 202 518 308
- NL-C- 2 002 137
- US-A1- 2011 148 058
- US-A1- 2011 309 658

## Description

### 1. Domaine de l'invention

Le domaine de l'invention est celui de la puériculture, et plus particulièrement, des poussettes, ou voitures d'enfants.

### 2. Art antérieur

La plupart des poussettes ne présentent pas de têtière réglable en hauteur le long du dossier de l'assise. Ces poussettes ne permettent donc pas de protéger la tête de l'enfant tout au long de sa croissance (c'est-à-dire entre sa naissance et l'âge de 3 à 4 ans).

Sur certaines poussettes toutefois, la têtière est fixée de façon amovible au siège de la poussette par le biais de boutons pressions ou de bandes à boucles et crochets (appelées bandes « Velcro » (marque déposée)), ou bien elle est tenue par le harnais de maintien de l'enfant. L'ajustement de la têtière à la taille de l'enfant nécessite, par conséquent, des manipulations ce qui s'avère peu pratique.

La plupart des poussettes comprennent en outre une capote formant pare-soleil, également appelée canopy, montée sur le cadre de la poussette de façon pivotante et pliable.

Les possibilités de réglage du canopy sont toutefois limitées ne protégeant l'enfant qu'imparfaitement de l'air et/ou du soleil au cours de sa croissance. Le document NL 2002137C décrit un siège selon le préambule de la revendication 1.

### 3. Objectifs de l'invention

L'invention à pour objectif de pallier au moins certains de ces inconvénients.

Plus précisément, un objectif de l'invention est de fournir une poussette équipée d'une têtière et d'un canopy plus ergonomique.

Un autre objectif de l'invention est de fournir une technique, qui réduit et simplifie les manipulations nécessaires au pliage et au dépliage de la têtière et du canopy.

Encore un autre objectif de l'invention est de fournir une telle poussette, qui offre une bonne compacité en position pliée, permettant notamment un transport et un rangement aisés.

### 4. Résumé de l'invention

Ces objectifs, ainsi que d'autres qui apparaîtront plus clairement par la suite, sont atteints à l'aide d'une poussette, comprenant un dossier équipé d'une têtière et d'un canopy.

Selon l'invention, ladite têtière est montée mobile en coulissement par rapport audit dossier, et une première partie dudit canopy est solidaire de ladite têtière.

L'approche de l'invention consiste à solidariser le canopy d'une poussette avec la têtière de celle-ci, de façon à permettre un réglage en hauteur de l'ensemble, et d'adapter la têtière et le canopy à la taille de l'enfant tout au long de sa croissance.

Une telle approche permet d'offrir une position pliée compacte du siège de poussette.

Selon un aspect particulier de l'invention, ledit canopy est monté sur au moins deux baleines, une desdites baleines étant solidarisée à ladite têtière.

Plus de deux baleines peuvent être prévues.

Selon un aspect particulier de l'invention, une deuxième partie dudit canopy est montée mobile par rapport à un élément de structure dudit siège et/ou de châssis de ladite poussette.

Selon un aspect particulier de l'invention, ladite deuxième partie comprend, de chaque côté dudit siège, un élément de support d'une des extrémités de chacune desdites baleines.

Selon un aspect particulier de l'invention, lesdites baleines sont mobiles en rotation par rapport audit élément de support.

Le mécanisme pour déplier/replier la capote met en oeuvre une armature sur laquelle est fixée la toile et comprenant des baleines qui sont montées sur un support mobile de la poussette.

Selon un aspect particulier de l'invention, ledit élément de support est monté coulissant le long d'une glissière.

Selon un aspect particulier de l'invention, ladite glissière est montée sur une paroi latérale dudit siège et/ou de châssis de ladite poussette.

Selon un aspect particulier de l'invention, ladite têtière est montée sur un support de têtière monté mobile en coulissement par rapport audit dossier.

Selon un aspect particulier de l'invention, le support de têtière présente des moyens de guidage en coulissement de deux sangles de harnais de maintien d'un enfant dans ledit siège.

Selon un aspect particulier de l'invention, lesdits moyens de guidage comprennent deux lumières.

Selon un aspect particulier de l'invention, les extrémités de chacune des sangles sont fixées sur un élément de structure dudit siège et/ou de châssis de ladite poussette.

Selon un aspect particulier de l'invention, ledit support de têtière présente une forme en canne.

Selon un aspect particulier de l'invention, lesdits moyens de guidage sont disposées à l'extrémité de la portion recourbée du support de têtière.

Selon un aspect particulier de l'invention, ladite extrémité présente une forme évasée.

L'invention concerne, par ailleurs, une poussette comprenant au moins un siège tel que décrit précédemment.

### 5. Liste des figures

D'autres caractéristiques et avantages de l'invention apparaîtront à la lecture de la description suivante d'un mode de réalisation de l'invention, donnée à titre de simple exemple illustratif et non limitatif, et des dessins annexés parmi lesquels :
- les figures 1A à 1E illustrent, de façon schématique, les cinématiques de déplacement du dossier, de la têtière et du canopy du siège de poussette de l'invention ;
- les figures 2A à 2E sont différentes vues du siège de poussette selon un premier mode de réalisation de l'invention, lorsque le dossier est relevé et la têtière en position basse ;
- les figures 3A à 3C sont différentes vues du siège de poussette du premier mode de réalisation, lorsque le dossier est relevé et la têtière en position haute ;
- les figures 4A à 4C sont différentes vues du siège de poussette du premier mode de réalisation, lorsque le dossier est rabaissé et la têtière en position haute;
- les figures 5A et 5B illustrent un deuxième mode de réalisation du siège de poussette, et présentent en particulier des vues en trois dimensions de la structure sous-jacente du siège et du harnais de sécurité dans deux configurations ;
- les figures 6A et 6B sont des vues en perspective du siège de poussette, dans sa configuration d'utilisation ;
- les figures 7A et 7B illustrent, de façon schématique, les cinématiques de déplacement de la têtière, du canopy et du harnais du siège de poussette selon le deuxième mode de réalisation.

### 6. Description détaillée de l'invention

### 6.1 Description d'un premier mode de réalisation

Le siège 1 de poussette selon l'invention comprend, de façon classique, une assise 11, un dossier 12 monté pivotant par rapport à l'assise 11, une têtière 13 et un canopy (ou capote formant pare-soleil et/ou protection contre le vent et/ou la pluie) 14.

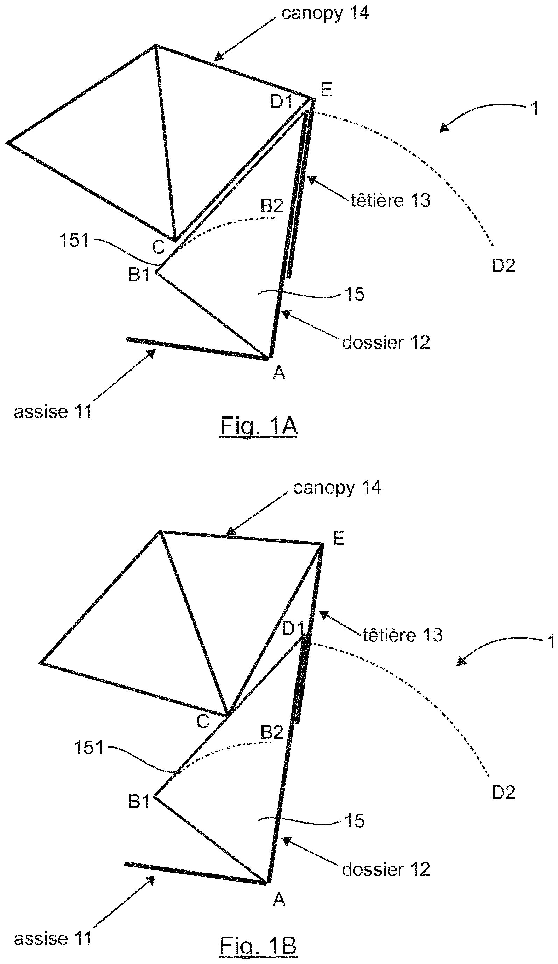

Les figures 1A à 1E illustrent, de façon schématique, différentes configurations du dossier 12 et de la têtière 13 du siège de poussette 1 selon l'invention.

Comme illustré sur ces figures, le dossier 12 est monté articulé autour de l'axe de rotation A sur l'assise 11 (qui est considérée comme fixe par rapport au sol sur ces figures).

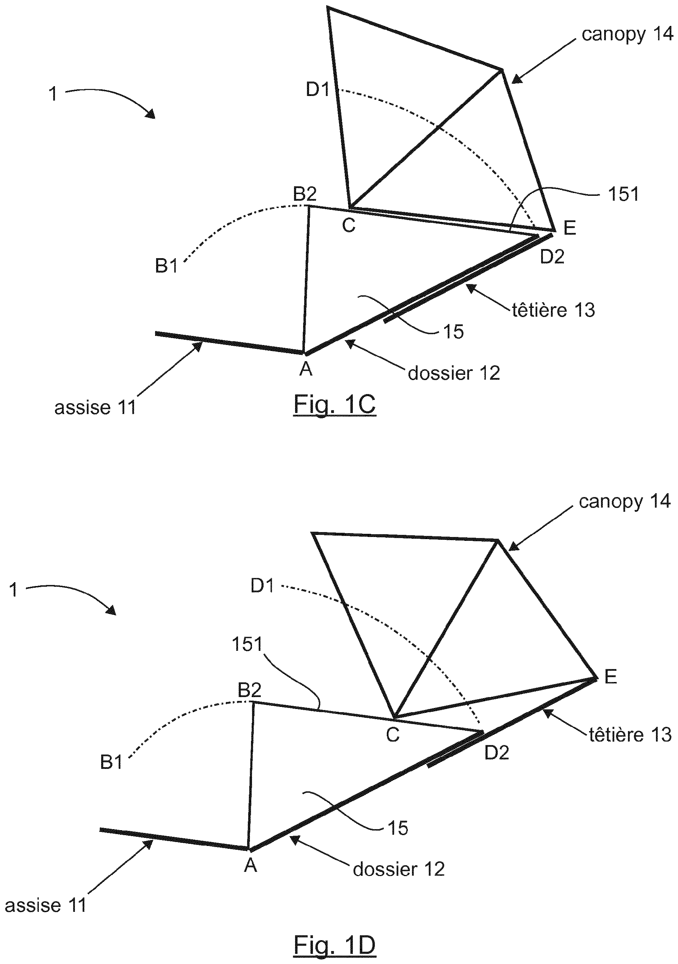

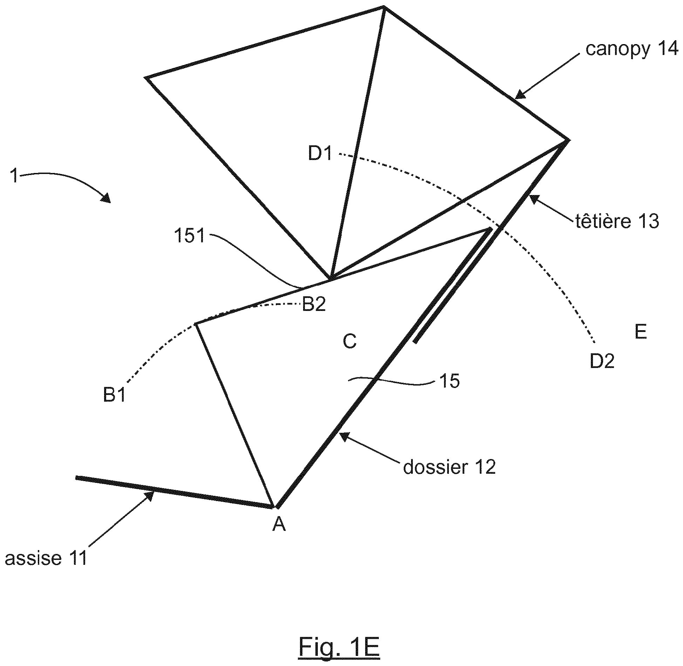

Le dossier 12 peut être réglé entre deux positions extrêmes, à savoir une position relevée, où le dossier 12 est légèrement incliné par rapport à la verticale (figures 1A et 1B), et une position rabattue, où le dossier 12 est légèrement incliné par rapport à l'horizontale (figures 1C et 1D), le dossier 12 pouvant prendre plusieurs positions intermédiaires (figure 1E). Lors du réglage du dossier 12, le haut du dossier suit une trajectoire circulaire (représentée en pointillés) entre le point D1 et le point D2.

Sur chaque côté du dossier 12 est fixée une partie latérale 15 triangulaire délimitée par les points A, B1, D1. Lors du réglage du dossier 12, le point B1 suit une trajectoire circulaire (représentée en pointillés) entre le point B1 et le point B2.

La têtière 13, qui est solidaire du dossier 12, est réglable en translation par rapport au dossier (plusieurs positions possibles). Le coulissement de la têtière 13 par rapport au dossier 12 peut être mis en oeuvre par le biais d'une ou plusieurs glissières, d'un coulissement tube dans tube ou de tout autre moyen connu.

La têtière 13 peut être verrouillée dans sa position une fois sa hauteur ajustée par l'utilisateur. Le verrouillage peut, par exemple, être réalisé par l'intermédiaire d'une pince, d'une vis, d'un cliquet ou d'une forme permettant un blocage. Ce dispositif de verrouillage est libérable, par exemple, manuellement.

Le canopy 14, qui est représenté en position ouverte/déployée sur les figures, est d'une part articulé en E en haut de la têtière 13 et, d'autre part, monté coulissant en C dans un rail 151 de la partie latérale 15. Le rail 151 est délimité par les points B1, D1, le point C du canopy 14 pouvant coulisser le long du rail 151 (entre les points B1, D1).

Sur la figure 1A, le dossier 12 est relevé et la têtière 13 est en position basse.

Sur la figure 1B, le dossier 12 est relevé et la têtière 13 est en position haute.

Lorsque l'utilisateur règle la têtière 13, le canopy 14, qui est articulé en E sur la têtière 13, suit la trajectoire linéaire de la têtière 13 et le point C du canopy 14 suit la trajectoire linéaire du rail 151 (entre B1 et D1).

En d'autres termes, le canopy 14 est lié à la têtière 13.

Selon les modes de réalisation, le rail 151 peut être un rail mâle (présentant par exemple une section de forme générale en T), le point C portant un coulisseau femelle, chevauchant le rail 151. Inversement, le rail 151 peut être un rail femelle, ou glissière, à l'intérieur duquel coulisse un coulisseau mâle, solidaire du point C.

Ces modes de réalisation sont donnés à titre de simples exemples illustratifs et non limitatifs. D'autres modes de réalisation sont bien évidemment envisageables.

Sur la figure 1C, le dossier 12 est rabattu et la têtière 13 est en position basse.

Lorsque l'utilisateur penche le dossier 12 vers l'arrière jusqu'à la position finale illustrée sur la figure 1C, le haut du dossier 12 passe du point D1 au point D2 et entraine avec lui le rail 151, le segment B1D1 passant en position B2D2 dans la position finale illustrée.

Sur la figure 1D, le dossier 12 est rabattu et la têtière 13 est en position haute.

Lorsque l'utilisateur règle la têtière 13, le canopy 14 fixé en E sur la têtière 13 suit la trajectoire linéaire de la têtière 13 et le point C du canopy 14 suit la trajectoire linéaire du rail 151 (entre les points B2 et D2).

Sur la figure 1E, le dossier 12 et la têtière 13 sont dans des positions intermédiaires.

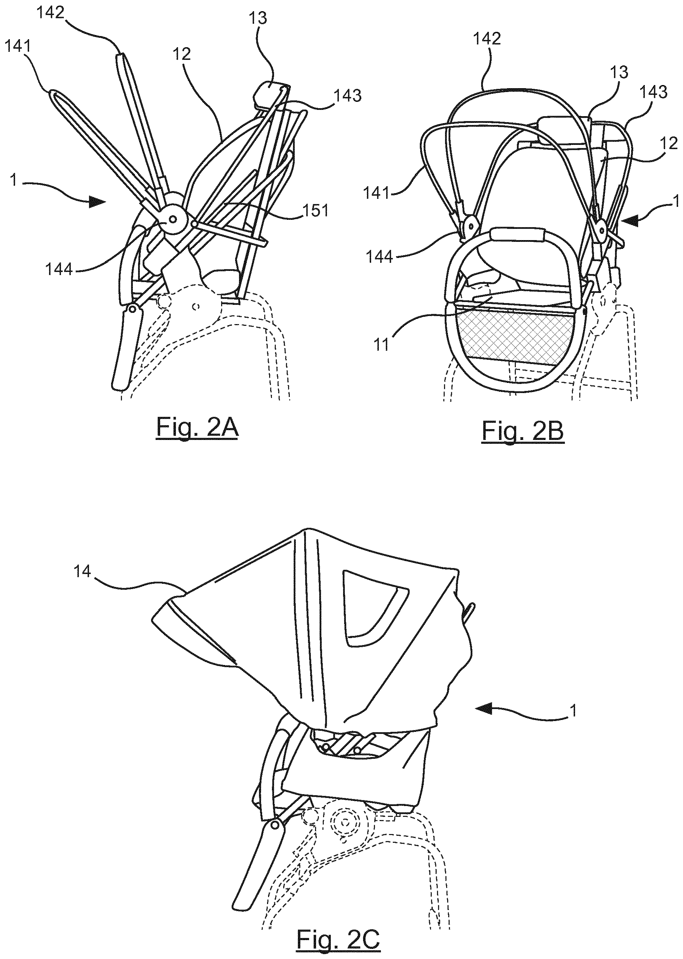

Les figures 2A et 2B sont des vues de côté et en perspective respectivement du siège 1, le dossier 12 étant relevé, la têtière 13 abaissée et la toile du canopy 14 ayant été retirée. Par souci de clarté, le châssis de la poussette est partiellement représenté.

On distingue sur ces figures la baleine avant 141, la baleine centrale 142 et la baleine arrière 143 sur lesquelles est monté la toile du canopy 14. Ces baleines 141, 142, 143 sont montées pivotantes sur un bloc de support 144 situé de chaque côté du siège 1, qui est monté coulissant dans le rail 151.

La baleine arrière 143 est solidaire de la têtière 13 et est fixée à cette dernière partout moyen connu.

La figure 2C montre le siège dans la même position que les figures 2A et 2B, une fois la toile du canopy 14 montée sur les baleines 141, 142, 143, le canopy 14 étant en position déployée.

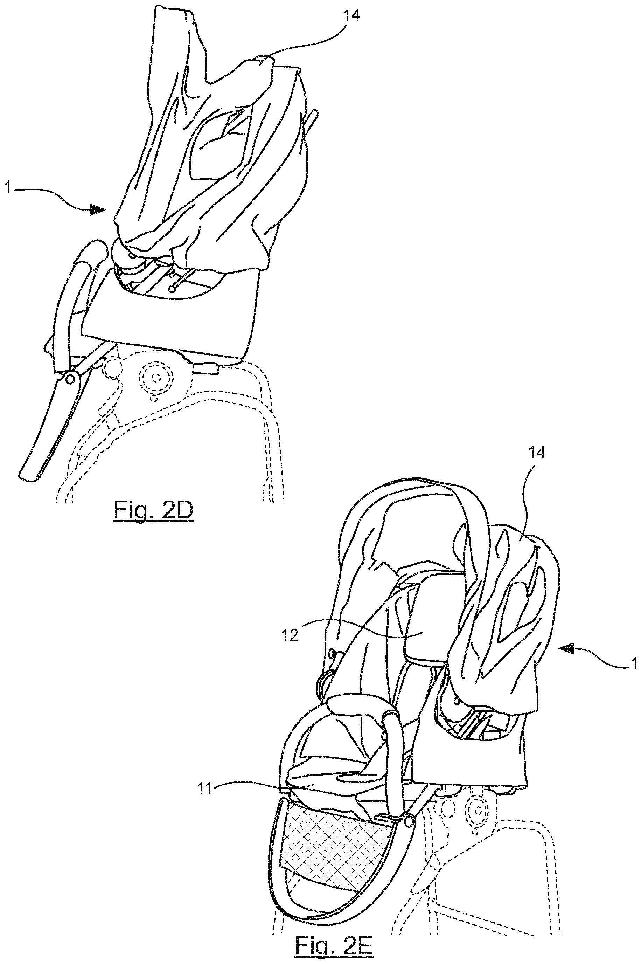

Les figures 2D et 2E sont des vues de côté et en perspective respectivement du siège 1, le dossier 12 étant relevé, la têtière 13 abaissée et le canopy 14 en position repliée.

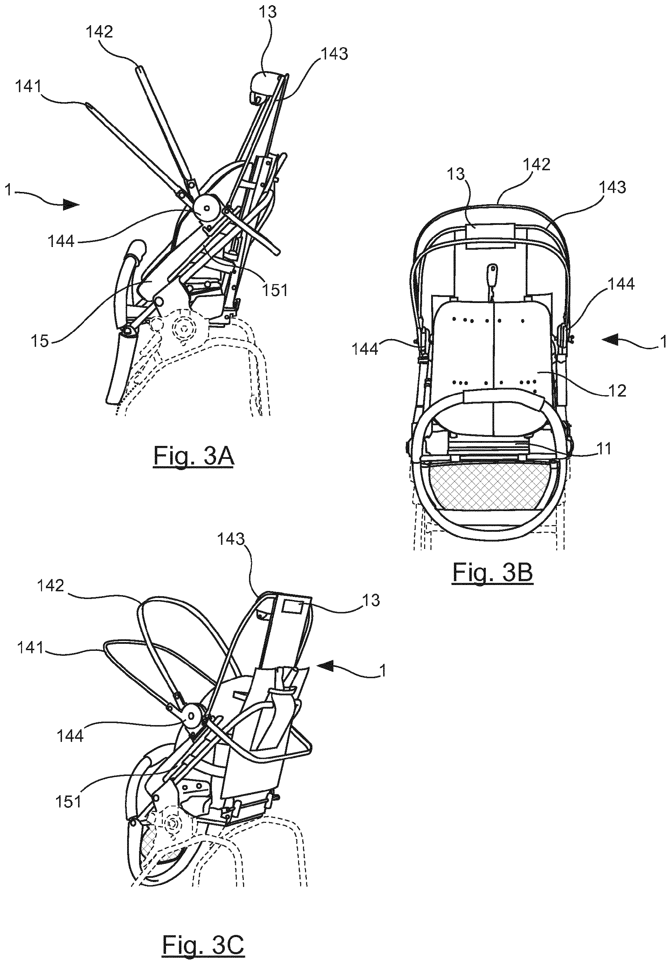

Les figures 3A à 3C sont différentes vues du siège 1, le dossier 12 étant relevé, la têtière 13 en position haute et la toile du canopy 14 ayant été retirée.

On voit que le coulissement de la têtière 13 vers le haut a entrainé le déplacement de la baleine arrière 143 vers le haut. Par conséquent, le bloc de support 144 des baleines s'est déplacé vers le haut du rail 151.

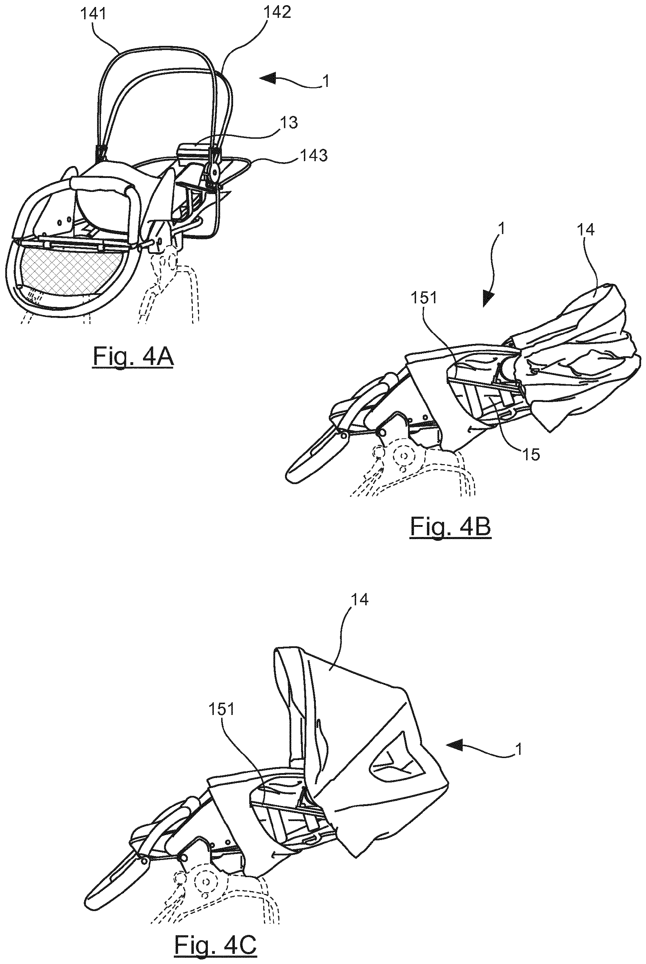

Les figures 4A à 4C sont différentes vues du siège 1, le dossier 12 étant rabaissé et la têtière 13 en position haute. Sur la figure 4A, la toile du canopy 14 est retirée. Sur la figure 4B, le canopy 14 est replié et sur la figure 4C, le canopy 14 est déployé.

La forme du siège, de la têtière et du canopy n'est pas limitée à celle illustrée. Bien que l'on décrive le hamac seul, on comprend qu'il peut être équipé de moyens de solidarisation réversibles au châssis d'une poussette, ou être solidarisé de façon fixe à un tel châssis. Dans ce dernier cas, le rail 151 peut être solidaire de ce châssis, et non de la structure du hamac.

### 6.2 Description d'un deuxième mode de réalisation

Selon ce deuxième mode de réalisation de l'invention, le siège 1 de poussette est muni d'un harnais 5 points destiné à maintenir l'enfant dans le siège et à assurer sa sécurité.

Le dossier 12, la têtière 13 et le canopy 14 du siège 1 de poussette peuvent prendre les différentes configurations décrites en relation avec les figures 1A à 1E.

De façon avantageuse, la taille du harnais 16 varie en fonction du réglage en hauteur de la têtière 13 et donc du canopy 14.

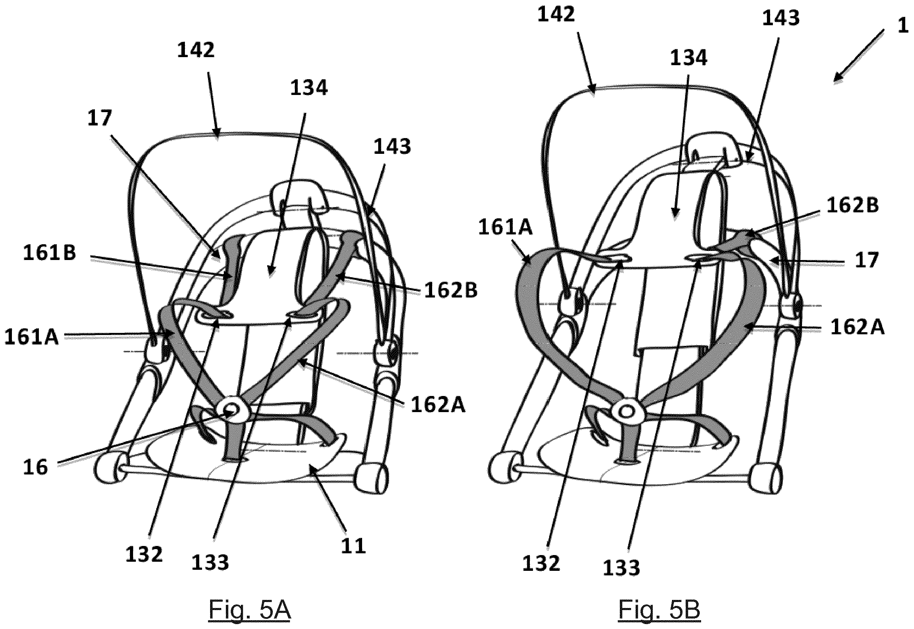

Comme illustré sur les figures 5A, 5B, 6A, 6B, et 7A et 7B, la longueur des sangles du harnais 16 peut être augmentée en même temps que la têtière 13 est déplacée en translation par rapport au dossier 12, par exemple entre une position basse et une position haute.

Les figures 5A et 5B sont des vues en trois dimensions de la structure sous-jacente du siège 1, le dossier 12 étant relevé, la têtière 13 et la toile du canopy 14 ayant été retirées. Par souci de clarté, le châssis de la poussette est partiellement représenté.

La têtière 13 (non représentée) est fixée à un support de têtière 134 en forme de canne, réalisé en matière plastique rigide, par exemple en polypropylène. D'autres formes et matériaux de support de têtière peuvent également être utilisés. C'est ce support de têtière 134 qui coulisse par rapport au dossier 12, notamment pour régler la têtière 13 en hauteur, de façon à ce qu'elle soit adaptée à la taille de l'enfant.

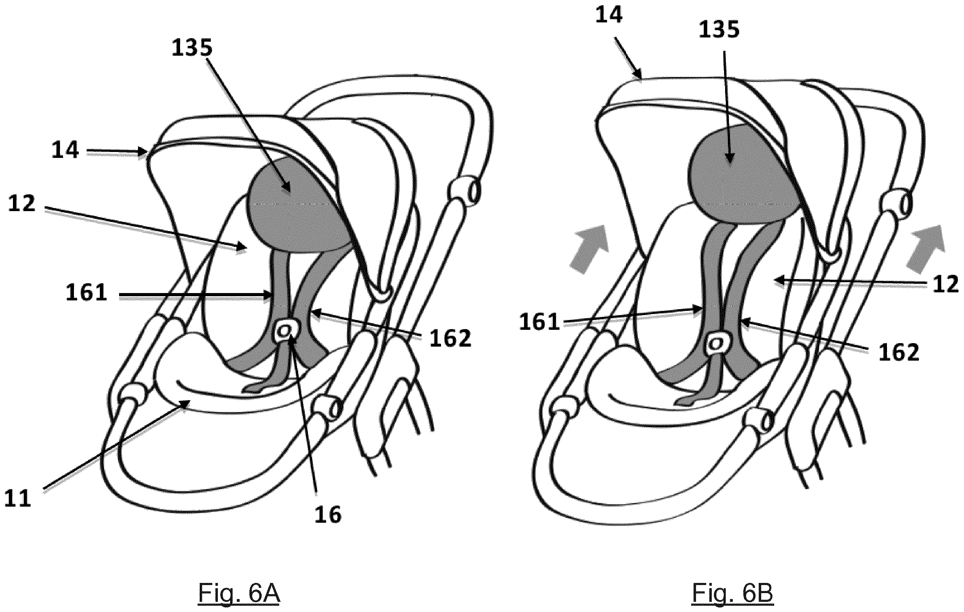

Un coussin 135 est fixé sur la têtière 13 de manière à accueillir la tête de l'enfant, comme représenté figures 6A et 6B.

L'extrémité libre du support de têtière 134, autrement dit l'extrémité libre de la partie courte de la canne, est sensiblement plus large que le reste du support. Deux lumières 132, 133 y sont percées, et font office de rainures de guidage pour les sangles 161, 162 du harnais 16. Ces sangles 161, 162, destinées à entourer le torse de l'enfant, sont ainsi insérées dans les lumières 132, 133 et peuvent y coulisser librement.

La forme des lumières n'est pas limitée à celle illustrée. Par ailleurs, tout autre moyen équivalent remplissant une fonction de guidage des sangles du harnais peut être mis en oeuvre.

L'extrémité haute des sangles 161, 162 est fixée à la structure du siège 17. Ces sangles 161, 162 sont donc fixes par rapport au siège 1. Les trois sangles de jambe et d'entrejambe du harnais 16 sont elles-aussi fixées, comme c'est le cas traditionnellement, sur l'assise 11 du siège. Ainsi, le harnais 16 ne se déplace pas lorsque la têtière 13 coulisse. Seuls les points de contact des sangles 161, 162 avec la têtière 13, autrement dit les lumières 132, 133, sont mobiles en hauteur. On note que chaque sangle 161, 162 du harnais 16 est de longueur fixe et comprend deux portions basses 161A, 162A destinées à maintenir l'enfant dans le siège 1 (situées sur un premier côté des lumières 132, 133) et deux portions hautes 161B, 162B qui servent de longueur de réserve (situées sur un deuxième côté des lumières 132, 133).

La figure 5A illustre le support de têtière 134 en position basse, les portions basses 161A, 162A des sangles 161, 162 du harnais étant sensiblement au minimum de leur longueur. Cette première configuration du harnais 16 est adaptée à un enfant en bas âge, par exemple un enfant de six mois. Le canopy 14 (non représenté), monté sur les baleines 142 et 143 est également en position basse.

La figure 5B illustre le support de têtière 134 en position haute, les portions basses 161A, 162A des sangles 161, 162 du harnais étant sensiblement au maximum de leur longueur. Cette seconde configuration du harnais 16 est adaptée à un enfant un peu plus âgé, par exemple 2 ans ½. Le canopy 14 est alors également en position haute.

Ces deux configurations de siège 1 de poussette sont également représentées sur les figures 6A et 6B respectivement, la structure visible sur les figures 5A et 5B étant recouverte des éléments de siège.

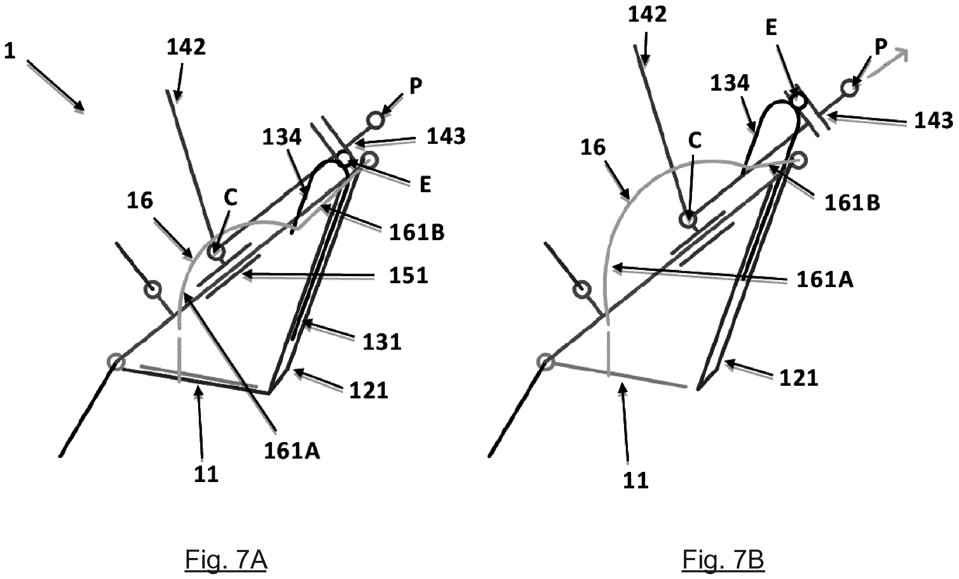

Les figures 7A et 7B illustrent schématiquement la cinématique mise en oeuvre pour passer de la première configuration du siège (figure 6A) à la deuxième configuration du siège (figure 6B).

En se plaçant dans la première configuration (figure 7A), si un utilisateur tire vers le haut la poignée P liée à la baleine arrière 143 du canopy 14, l'ensemble formé par le support de têtière 134 et le canopy 14 coulisse par rapport au dossier 12.

Pour cela, le support de têtière 134 comporte un élément de guidage long 131 qui coulisse dans un fourreau 121 (l'élément de guidage long 131 peut, dans une variante, coulisser sur le fourreau 121).

Le canopy 14 est lié par une liaison pivot glissant au support de têtière 134. Ainsi, comme décrit dans le premier mode de réalisation, l'extrémité haute du canopy 14, articulée en E sur le support de têtière 134, suit la trajectoire linéaire de la têtière 13, tandis que son extrémité basse articulée en C suit la trajectoire linéaire du rail 151, aménagé dans la structure du siège 1.

Le harnais 16 étant fixé à la structure 17 du siège 1, le déplacement du support de têtière 134 entraîne le déplacement du point de contact entre les sangles 161, 162 et les lumières 132, 133, selon cette même trajectoire linéaire de la têtière. La longueur des portions basses 161A, 162A des sangles 161, 162 est ainsi allongée. On comprend que la longueur des portions basses 161A, 162A des sangles 161, 162 peut être réduite en repoussant la poignée P de la têtière 13 vers le bas.

Le support de têtière 134 (et donc la têtière 13) peut être verrouillé à des hauteurs intermédiaires entre les première (figure 7A) et deuxième (figure 7B) configurations, de manière à obtenir des longueurs spécifiques des portions basses 161A, 162A des sangles 161, 162 du harnais. En particulier, la têtière présente trois positions de verrouillage, correspondant à trois hauteurs de harnais normatives aux Etats-Unis.

## Revendications

1. Siège (1) de poussette, comprenant un dossier (12) équipé d'une têtière (13) et d'un canopy (14), ladite têtière (13) étant montée mobile en coulissement par rapport audit dossier (12),
**caractérisé en ce qu'**une première partie (E) dudit canopy (14) est articulée à ladite têtière (13), et montée coulissante parallèlement au dossier en même temps que ladite têtière (13),
et **en ce qu'**une deuxième partie (C) dudit canopy (14) est montée coulissante le long d'une glissière (151) non parallèle audit dossier, solidaire d'un élément de structure dudit siège (1) et/ou de châssis de ladite poussette.

2. Siège (1) de poussette selon la revendication 1, **caractérisé en ce que**, ledit canopy (14) est monté sur au moins deux baleines (141, 142, 143), une desdites baleines (143) étant solidarisée à ladite têtière (13).

3. Siège (1) de poussette selon les revendications 1 et 2, **caractérisé en ce que** ladite deuxième partie comprend, de chaque côté dudit siège (1), un élément de support (144) d'une des extrémités de chacune desdites baleines (141, 142, 143).

4. Siège (1) de poussette selon la revendication 3, **caractérisé en ce que** lesdites baleines (141, 142, 143) sont mobiles en rotation par rapport audit élément de support (144).

5. Siège (1) de poussette selon l'une quelconque des revendications 1 à 4, **caractérisé en ce que** ledit élément de support (144) est monté coulissant le long de ladite glissière (151).

6. Siège (1) de poussette selon la revendication 5, **caractérisé en ce que** ladite glissière (151) est montée sur une paroi latérale (15) dudit siège (1) et/ou de châssis de ladite poussette.

7. Siège (1) de poussette selon les revendications 1 à 6, **caractérisé en ce que** ladite têtière (13) est montée sur un support de têtière (134) monté mobile en coulissement par rapport audit dossier (12).

8. Siège (1) de poussette selon la revendication 7, **caractérisé en ce que** le support de têtière (134) présente des moyens de guidage en coulissement de deux sangles (161, 162) de harnais (16) de maintien d'un enfant dans ledit siège (1) .

9. Siège (1) de poussette selon la revendication 8, **caractérisé en ce que** lesdits moyens de guidage comprennent deux lumières (132, 133).

10. Siège (1) de poussette selon la revendication 8 ou 9, **caractérisé en ce que** les extrémités de chacune des sangles (161, 162) sont fixées sur un élément de structure dudit siège (1) et/ou de châssis de ladite poussette.

11. Siège (1) de poussette selon l'une des revendications 7 à 10, **caractérisé en ce que** ledit support de têtière (134) présente une forme en canne.

12. Siège (1) de poussette selon la revendication 11, **caractérisé en ce que** lesdits moyens de guidage sont disposées à l'extrémité de la portion recourbée du support de têtière (134).

13. Siège (1) de poussette selon la revendication 12, **caractérisé en ce que** ladite extrémité présente une forme évasée.

14. Poussette comprenant au moins un siège (1) selon l'une quelconque des revendications 1 à 13.

## Patentansprüche

1. Sitz (1) eines Kinderwagens, der eine Rückenlehne (12) aufweist, die ein Kopfstück (13) und ein Verdeck (14) umfasst, wobei das Kopfstück (13) gleitverschiebbar bezüglich der Rückenlehne (12) montiert ist,
**dadurch gekennzeichnet, dass** ein erster Teil (E) des Verdecks (14) mit dem Kopfstück (13) verbunden ist und gleichzeitig mit dem Kopfstück (13) an der Rückenlehne parallel verschiebbar montiert ist,
und dadurch, dass ein zweiter Teil (C) des Verdecks (14) entlang einer Führung (151) nicht parallel zu der Rückenlehne verschiebbar montiert ist und mit einem Strukturelement des Sitzes (1) und/oder des Gestells des Kinderwagens verbunden ist.

2. Sitz (1) eines Kinderwagens nach Anspruch 1, **dadurch gekennzeichnet, dass** das Verdeck (14) auf wenigstens zwei Rippen (141, 142, 143) montiert ist, wobei eine der Rippen (143) mit dem Kopfstück (13) verbunden ist.

3. Sitz (1) eines Kinderwagens nach den Ansprüchen 1 und 2, **dadurch gekennzeichnet, dass** der zweite Teil von jeder Seite des Sitzes (1) ein Stützelement (144) einer der Enden jeder der Rippen (141, 142, 143) aufweist.

4. Sitz (1) eines Kinderwagens nach Anspruch 3, **dadurch gekennzeichnet, dass** die Rippen (141, 142, 143) drehbewegbar bezüglich dem Stützelement (144) sind.

5. Sitz (1) eines Kinderwagens nach einem der Ansprüche 1 bis 4, **dadurch gekennzeichnet, dass** das Stützelement (144) verschiebbar entlang der Führung (151) montiert ist.

6. Sitz (1) eines Kinderwagens nach Anspruch 5, **dadurch gekennzeichnet, dass** die Führung (151) auf einer Seitenwand (15) des Sitzes (1) und/oder des Gestells des Kinderwagens montiert ist.

7. Sitz (1) eines Kinderwagens nach einem der Ansprüche 1 bis 6, **dadurch gekennzeichnet, dass** das Kopfstück (13) auf einem Kopfstückträger (134) montiert ist, die verschiebbar bezüglich der Rückenlehne (12) montiert ist.

8. Sitz (1) eines Kinderwagens nach Anspruch 7, **dadurch gekennzeichnet, dass** die Kopfstütze (134) Mittel zum gleitenden Führen von zwei Gurten (161, 162) des Geschirrs (16) zum Halten eines Kindes in dem Sitz (1) aufweist.

9. Sitz (1) eines Kinderwagens nach Anspruch 8, **dadurch gekennzeichnet, dass** die Mittel zum Führen zwei Öffnungen (132, 133) aufweisen.

10. Sitz (1) eines Kinderwagens nach Anspruch 8 oder 9, **dadurch gekennzeichnet, dass** die Enden jedes der Gurte (161, 162) auf einem Strukturelement des Sitzes (1) und/oder des Gestells des Kinderwagens fixiert sind.

11. Sitz (1) eines Kinderwagens nach einem der Ansprüche 7 bis 10, **dadurch gekennzeichnet, dass** der Kopfstückträger (134) eine Gehstock-Form aufweist.

12. Sitz (1) eines Kinderwagens nach Anspruch 11, **dadurch gekennzeichnet, dass** die Mittel zum Führen an dem Ende des gebogenen Abschnittes des Kopfstückträgers (134) angeordnet sind.

13. Sitz (1) eines Kinderwagens nach Anspruch 12, **dadurch gekennzeichnet, dass** das Ende eine aufgeweitete Form aufweist.

14. Kinderwagen, der wenigstens einen Sitz (1) nach einem der Ansprüche 1 bis 13 aufweist.

## Claims

1. Pushchair seat (1), comprises a seatback (12) provided with a headrest (13) and a canopy (14), said headrest (13) being mounted mobile sliding with respect to said seatback (12),
**characterized in that** a first portion (E) of said canopy (14) is articulated on said headrest (13), and mounted sliding parallel to the seatback at the same time as the headrest (13),
and **in that** a second portion (C) of said canopy (14) is mounted sliding along a slider (151) not parallel to said seatback, integral with a structure element of said seat (1) and/or frame of said pushchair.

2. Pushchair seat (1) according to claim 1, **characterised in that**, said canopy (14) is mounted on at least two umbrella ribs (141, 142, 143), with one of said umbrella ribs (143) being integral with said headrest (13).

3. Pushchair seat (1) according to claims 1 and 2, **characterised in that** said second portion comprises, on each side of said seat (1), a support element (144) of one of the ends of each of said umbrella ribs (141, 142, 143).

4. Pushchair seat (1) according to claim 3, **characterised in that** said umbrella ribs (141, 142, 143) are mobile in rotation with respect to said support element (144).

5. Pushchair seat (1) according to any of claims 1 to 4, **characterised in that** said support element (144) is mounted sliding along the slider (151).

6. Pushchair seat (1) according to claim 5, **characterised in that** said slider (151) is mounted on a lateral wall (15) of said seat (1) and/or frame of said pushchair.

7. Pushchair seat (1) according to claims 1 to 6, **characterised in that** said headrest (13) is mounted on a headrest support (134) mounted mobile in sliding with respect to said seatback (12).

8. Pushchair seat (1) according to claim 7, **characterised in that** the headrest support (134) has means for guiding in sliding of two straps (161, 162) of a harness (16) for maintaining a child in said seat (1).

9. Pushchair seat (1) according to claim 8, **characterised in that** said means for guiding comprise two holes (132, 133).

10. Pushchair seat (1) according to claim 8 or 9, **characterised in that** the end of each one of the straps (161, 162) are fixed onto a structure element of said seat (1) and/or frame of said pushchair.

11. Pushchair seat (1) according to one of claims 7 to 10, **characterised in that** said headrest support (134) has a rod shape.

12. Pushchair seat (1) according to claim 11, **characterised in that** said means for guiding are arranged at the end of the curved portion of the headrest support (134).

13. Pushchair seat (1) according to claim 12, **characterised in that** said end has an expanded shape.

14. Pushchair comprising at least one seat (1) according to any of claims 1 to 13.
